# EUROPEAN PATENT APPLICATION

(11) **EP 4 593 359 A1**
(43) Date of publication of application: **30.07.2025**
(21) Application number: 24153300.9
(22) Date of filing: 23.01.2024
(51) Int. Cl.: H04L 69/14

(54) **SYSTEM FOR PROVIDING SELECTION OF A COMMUNICATION CHANNEL, AND A METHOD THEREOF**

(71) Applicant: Hitachi Energy Ltd, 8050 Zürich (CH)
(72) Inventor: Huser-Berta, Benjamin, 8046 Zurich (CH); Ferranti, Ettore, 8165 Schleinikon (CH); Gerspach, Stephan, 79737 Herrischried (DE); Indlekofer, Andreas, 79771 Klettgau (DE); Malara, Grzegorz, 30-611 Krakow (PL)
(74) Representative: Zacco Sweden AB

(57) **Abstract**

Embodiments of the present disclosure provide a system (2000) and method (300) for providing selection of communication channel (202, 204, 206) between at least two end points (208, 210) through service bus (212). The system (2000) comprises at least one first end point (208) and second end point (210) arranged to share data with one or more devices (100, 200). The service bus (212) arranged for sharing data between first endpoint (208) and second endpoint (210) via at least one of first communicating channel (202), second communication channel (204) or third communication channel (206) according to the determination of at least one of: occurrence or non-occurrence of first channel selection condition or occurrence or non-occurrence of the second channel selection condition in case of the occurrence of the first channel selection condition.

## Description

### TECHNICAL FIELD

The present disclosure relates generally to a field of substation automation system. More particularly, it is related to a system and method for providing selection of a communication channel between endpoints in the substation automation system.

### BACKGROUND

A substation automation system is a collection of hardware and software components that are used to monitor and control an electrical system, both locally and remotely. In the substation automation system, efficient communication is essential for accomplishing tasks within a given time requirement, i.e., systems may need to react in quasi-real time with respect to changes in power grids, and therefore messages that are exchanged between the systems via message buses may need to arrive at their intended destination as fast as possible. Choosing a right communication path for faster and efficient transfer of the messages is therefore of paramount importance and may be dependent on modes of connections between any two systems. The mode of connections may include cable, wire, or even shared memory.

So far, the communication path is either selected at the time of development or configuration of hardware and software components in the substation automation system. At the time of development, developers generally choose and code a particular solution for selecting the communication path for sharing messages between endpoints. Similarly at the configuration time, a system engineer may need to choose and configure a particular solution for selecting the right communication path. In other words, existing methods often rely on prior configuration of hardware components, or which may not always choose a fastest communication path and thus may lead to delays in message delivery between two endpoints. Furthermore, the existing methods may require manual intervention to change the communication path.

### SUMMARY

Consequently, there is a need for an improved system and a method for providing selection of a communication channel between two end points in a substation automation system.

It is therefore an object of the present disclosure to provide a system and a method for selection of a communication channel between end points, which mitigate, alleviate, or eliminate all or at least some of the above-discussed drawbacks of presently known solutions.

This and other objects are achieved by means of a system and a method, as defined in the appended claims. The term exemplary is in the present context to be understood as serving as an instance, example or illustration.

According to a first aspect of the present disclosure, a system for providing selection of a communication channel between at least two end points from a plurality of endpoints, through a service bus from a plurality of service buses is provided. The plurality of end points facilitates a communication between a plurality of devices in a communication network. The system comprises at least one first end point from the plurality of end points arranged to share data with one or more devices from the plurality of devices. The at least one first end point is arranged in at least one device from the plurality of devices. The system further comprises at least one service bus from the plurality of service buses. The at least one service bus comprising a processing circuitry. The processing circuitry is configured for receiving a request for sharing data between the at least one first endpoint and at least one second endpoint from a plurality of endpoints arranged to share data with the one or more devices from the plurality of devices. The at least one second point is arranged in at least one device from the plurality of devices. The processing circuitry is further configured for determining at least one of an occurrence or a non-occurrence of a first channel selection condition from one or more channel selection conditions, associated with the first endpoint and the second endpoint. The at least one service bus is further arranged for selecting a first communication channel from the one or more communication channels in case of the non-occurrence of the first channel selection condition. The at least one service bus is further arranged for determining at least one of an occurrence or a non-occurrence of a second channel selection condition from the one or more channel selection conditions, in case of the occurrence of the first channel selection condition. The at least one service bus is further arranged for selecting a second communication channel from the one or more communication channels for at least one of the non-occurrence of the second channel condition and the occurrence of the first channel condition. The at least one service bus is further arranged for selecting through the at least one service bus, a third communication channel from the one or more communication channels for at least one of the occurrence of the second channel condition and the occurrence of the first channel condition. The at least one service bus is further arranged for sharing data between the first endpoint and the second endpoint via at least one of the first communicating channel, the second communication channel or the third communication channel according to the determination of at least one of: the occurrence or non-occurrence of the first channel selection condition or the occurrence or non-occurrence of the second channel selection condition in case of the occurrence of the first channel selection condition.

Therefore, embodiments herein provide a system in which the plurality of end points facilitates a communication between the plurality of devices in the communication network by analysing one or more channel selection conditions through the service bus and thus, avoiding a need of any prior configuration to be done during a development time of any software or hardware product or any configuration required on customer side/during Project Engineering.

Further, the proposed system provides an efficient communication channel for sharing data between two endpoints, compared to sub-optimal decisions taken at development time of the software or hardware product or at time of configuring hardware components in the substation automation system.

Furthermore, with the proposed system, no configuration is needed on customer side or during project engineering phase which results in faster engineering.

In some embodiments, the system comprises at least one second end point from the plurality of end points. The at least one second end point is arranged in at least one device from the plurality of devices.

In some embodiments, both the first end point and the second point are registered with an end point directory. The end point directory stores: one or more first condition check parameters determining at least one of the non-occurrence or occurrence of the first channel selection condition; and one or more second condition check parameters for determining the non-occurrence or occurrence of the second channel selection condition.

In some embodiments, the one or more first condition check parameters comprises a mac address, Internet Protocol, IP Address or the Domain Name System, DNS name of one or more communication devices from a plurality of communication devices. The one or more communication devices are arranged to have at least one of the first end point and the second end point, and the one or more second condition check parameters comprise a Process Identification Number, PID of one or more computing processes from a plurality of computing processes assigned by at least one operating system. The at least one of the first end point and the second end point are arranged to run on at least one computing process from the plurality of computing processes.

Advantageously, with the proposed system, a software developer may write code irrespective of whether the target service or endpoints is local or remote.

In some embodiments, the determining the non-occurrence of the first channel condition comprises comparing at least one first condition check parameter from the one or more first condition check parameters, for at least two communication devices from the plurality of communication devices arranged to have at least one of the first end point and the second end point; obtaining a non-identical at least one first condition check parameter for each communication device from the at least two communication devices based on the comparing; identifying an arrangement of the first endpoint in a first communication device from the at least two communication devices based on the obtaining of the non-identical at least one first condition check parameter; and identifying an arrangement of the second endpoint in a second communication device from the at least two communication devices based on the obtaining of the non-identical at least one first condition check parameter.

Advantageously, the proposed system provides flexibility while designing products as there is no dependency on location where the endpoints or service is running.

In some embodiments, the first communication channel comprises a physical transport layer and the physical transport layer comprises an Ethernet communication channel.

In some embodiments, the determining the occurrence of the first channel condition comprises comparing at least one first condition check parameter from the one or more first condition check parameters for at least two communication devices from the plurality of communication devices arranged to have at least one of the first end point and the second end point; obtaining an identical at least one first condition check parameter for each communication device from the at least two communication devices; identifying an arrangement of each of the first endpoint and the second endpoint in any one a first communication device or a second communication device from the at least two communication devices based on the obtaining of the identical at least one first condition check parameter.

In some embodiments, the determining the non-occurrence of the second channel selection condition comprises comparing at least one first condition check parameter from the one or more first condition check parameters, for at least two communication devices from the plurality of communication devices arranged to have at least one of the first end point and the second end point; obtaining an identical at least one first condition check parameter for each communication device from the at least two communication devices; identifying an arrangement of each of the first endpoint and the second endpoint in any one a first communication device or a second communication device from the at least two communication devices based on the obtaining of the identical at least one first condition check parameter.

In some embodiments, the second communication channel comprises an internal communication channel of at least one device from the one or more devices, and the internal communication channel comprises a shared memory of the least one device.

In some embodiments, the determining the occurrence of the second channel selection condition comprises comparing at least one second condition check parameter from the one or more first condition check parameters for at least two computing processes from the plurality of computing processes arranged to run at least one of the first end point and the second end point; obtaining an identical at least one second condition check parameter for each computing process from the at least two computing processes; identifying any of a first computing process or a second computing process from the at least two computing processes arranged to run both the first endpoint and the second end point based on the obtaining of the identical at least one second condition check parameter.

In some embodiments, the third communication channel comprises an internal communication channel of the first process, and the internal communication channel comprises a zero copy communication channel.

In the proposed system the data can be shared between two endpoints which are running within a same computing process, through the internal communication channel such as zero copy. The internal communication channel may allow transmission of the data between the endpoints without copying the data in memory and hence may save time and resources. Thus, the proposed system provides a fastest communication between two endpoints for sharing the data.

According to some embodiments, the system is a substation automation system comprising hardware and software components that are used to monitor and control an electrical system, typically an electric power supply system.

According to a second aspect of the present disclosure, a method providing selection of the communication channel between the at least two end points from the plurality of endpoints, through the at least one service bus is provided. The plurality of end points facilitates the communication between the plurality of devices in the communication network. The method comprises receiving the request for sharing data between the first endpoint and the second endpoint from the plurality of endpoints by at the least one service bus. The at least one first end point and the at least one second end point is arranged in at least one device from the plurality of devices. The method further comprises determining, through the at least one service bus, at least one of the occurrence or the non-occurrence of the first channel selection condition from the one or more channel selection conditions, associated with the first endpoint and the second endpoint. The method further comprises selecting, through the at least one service bus, the first communication channel from the one or more communication channels in case of the non-occurrence of the first channel selection condition. The method further comprises determining, through the at least one service bus, at least one of the occurrence or the non-occurrence of the second channel selection condition from the one or more channel selection conditions, in case of the occurrence of the first channel selection condition. The method further comprises selecting, through the at least one service bus, the second communication channel from the one or more communication channels for at least one of the non-occurrence of the second channel condition and the occurrence of the first channel condition. The method further comprises selecting, through the at least one service bus, the third communication channel from the one or more communication channels for at least one of the occurrence of the second channel condition and the occurrence of the first channel condition. The data is shared between the first endpoint and the second endpoint via at least one of the first communicating channel, the second communication channel or the third communication channel according to the determination of at least one of: the occurrence or non-occurrence of the first channel selection condition or the occurrence or non-occurrence of the second channel selection condition in case of the occurrence of the first channel selection condition.

Advantageously, the proposed system provides an efficient path for communication, compared to sub-optimal decisions taken at compile or configuration time.

Further, embodiments herein provide a system in which plurality of end points facilitates a communication between a plurality of devices in a communication network by analysing one or more channel selection conditions through a service bus and thus, there is no need of any configuration to be done during a product developing time and no configuration are needed on customer side/during Project Engineering.

In some embodiments, both the first end point and the second point are registered with an end point directory. The end point directory stores: one or more first condition check parameters determining at least one of the non-occurrence or occurrence of the first channel selection condition; and one or more second condition check parameters for determining the non-occurrence or occurrence of the second channel selection condition.

In some embodiments, the one or more first condition check parameters comprises a mac address of one or more communication devices from a plurality of communication devices. The one or more communication devices are arranged to have at least one of the first end point and the second end point, and the one or more second condition check parameters comprise a Process Identification Number, PID of one or more computing processes from a plurality of computing processes assigned by at least one operating system. The at least one of the first end point and the second end point are arranged to run on at least one computing process from the plurality of computing processes.

In some embodiments, the determining the non-occurrence of the first channel condition comprises comparing at least one first condition check parameter from the one or more first condition check parameters, for at least two communication devices from the plurality of communication devices arranged to have at least one of the first end point and the second end point; obtaining a non-identical at least one first condition check parameter for each communication device from the at least two communication devices based on the comparing; identifying an arrangement of the first endpoint in a first communication device from the at least two communication devices based on the obtaining of the non-identical at least one first condition check parameter; and identifying an arrangement of the second endpoint in a second communication device from the at least two communication devices based on the obtaining of the non-identical at least one first condition check parameter.

In some embodiments, the first communication channel comprises a physical transport layer and the physical transport layer comprises an Ethernet communication channel.

In some embodiments, the determining the occurrence of the first channel condition comprises comparing at least one first condition check parameter from the one or more first condition check parameters for at least two communication devices from the plurality of communication devices arranged to have at least one of the first end point and the second end point; obtaining an identical at least one first condition check parameter for each communication device from the at least two communication devices; identifying an arrangement of each of the first endpoint and the second endpoint in any one a first communication device or a second communication device from the at least two communication devices based on the obtaining of the identical at least one first condition check parameter.

In some embodiments, the determining the non-occurrence of the second channel selection condition comprises comparing at least one first condition check parameter from the one or more first condition check parameters, for at least two communication devices from the plurality of communication devices arranged to have at least one of the first end point and the second end point; obtaining an identical at least one first condition check parameter for each communication device from the at least two communication devices; identifying an arrangement of each of the first endpoint and the second endpoint in any one a first communication device or a second communication device from the at least two communication devices based on the obtaining of the identical at least one first condition check parameter.

In some embodiments, the second communication channel comprises an internal communication channel of at least one device from the one or more devices, and the internal communication channel comprises a shared memory of the least one device.

In some embodiments, the determining the occurrence of the second channel selection condition comprises comparing at least one second condition check parameter from the one or more first condition check parameters for at least two computing processes from the plurality of computing processes arranged to run at least one of the first end point and the second end point; obtaining an identical at least one second condition check parameter for each computing process from the at least two computing processes; identifying any of a first computing process or a second computing process from the at least two computing processes arranged to run both the first endpoint and the second end point based on the obtaining of the identical at least one second condition check parameter.

In some embodiments, the third communication channel comprises an internal communication channel of the first process, and the internal communication channel comprises a zero-copy communication channel.

In the proposed system the data can be shared between two endpoints which are running within a same process, through the internal communication channel such as zero copy. The internal communication channel may allow transmission of the data between the endpoints without copying the data in memory and hence may save time and resources. Thus, the proposed system. Thus, the proposed system provides fastest communication between the endpoints for sharing the data.

Therefore, the proposed system provides an efficient communication channel for sharing data between two endpoints, without requiring any human intervention while allowing the system to be flexible and utilize an efficient path based on one or more communication channel selection conditions associated with the at least two end points.

Other advantages may be readily apparent to one having skill in the art. Certain embodiments may have some, or all of the recited advantages.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
FIG. 1 discloses a wireless communication system according to some embodiments;
FIG. 2 shows a schematic block diagram illustrating an example system for providing selection of a communication channel between at least two end points according to some embodiments;
FIG. 3 shows a flowchart illustrating example steps for a method providing selection of the communication channel between the at least two end points according to some embodiments;
FIG. 4 shows an example flow diagram providing selection of the communication channel between the at least two end points according to some embodiments; and
FIG. 5 shows an example computing environment according to some embodiments.

### DETAILED DESCRIPTION

Aspects of the present disclosure will be described more fully hereinafter with reference to the accompanying drawings. The system and method disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the invention. It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the examples set forth herein.ln the following description of exemplary embodiments, the same reference numerals denote the same or similar components.

In prior art, selection of a communication channel for sharing data between two endpoints are done either by a developer at the time of development of any software or by a system engineer at the time of configuring any hardware.

In contrast to the prior art, embodiments herein provide a system in which a plurality of end points facilitates a communication between a plurality of devices in a communication network by analysing one or more channel selection conditions through a service bus and thus, there is no need of any configuration to be done at the time of product development or while configuring the system or device particularly on customer side/ Project Engineering.

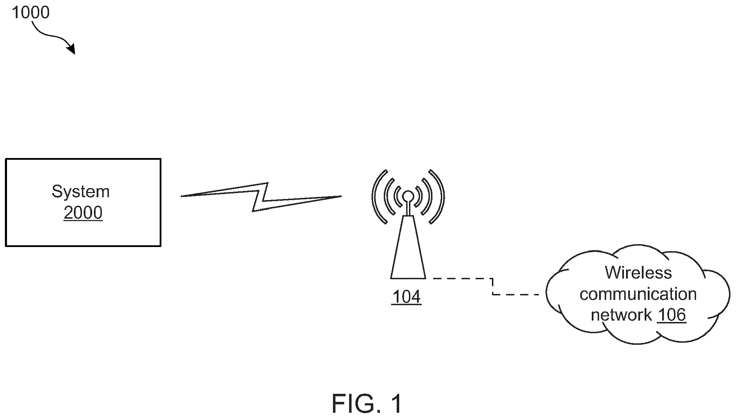

FIG. 1 discloses an example wireless communication system (1000). Although the subject matter described herein may be implemented in any appropriate type of system using any suitable components, the examples disclosed herein are described in related to a wireless communication system/wireless network, such as the example wireless communication system (1000) described in FIG. 1.

The wireless communication system (1000) may comprise and/or interface with any type of communication, telecommunication, data, cellular, and/or radio network or other similar type of system. The wireless communication system (1000) may be configured to operate according to specific standards or other types of predefined rules of procedures. Thus, the wireless communication system (1000) may implement communication standards, such as, but are not limited to, global system for mobile communications, GSM, universal mobile telecommunications system, UMTS, long term evolution, LTE, and/or other suitable 2G, 3G, 4G, or 5G standards, wireless local area network, WLAN, standards such as, IEEE 802.11 standards, and/or any other appropriate wireless communication standards, such as, worldwide interoperability for microwave access, WiMax, Bluetooth, Z-Wave and/or ZigBee standards.

For simplicity, as depicted in FIG. 1, the wireless communication system (1000) comprises a system (2000), a network node (104), and a network (106). The system (2000) and the network node (104) operate together in order to provide wireless connections in the wireless communication system (1000). The network (106) may comprise one or more backhaul networks, core networks, IP networks, public switched telephone networks, PSTNs, packet data networks, optical networks, wide-area networks, WANs, local area networks, LANs, wireless local area networks, WLANs, wired networks, wireless networks, metropolitan area networks, and other networks to enable communication between devices (for example, wireless devices and network node).

In an example, the network node (104) refer to equipment capable, configured, arranged, and/or operable to communicate directly or indirectly with the container-based computer system (2000) and/or with other network nodes or equipment in the wireless communication system (1000) to enable and/or provide wireless access to the system (2000) and/or to perform other functions (for example, administration) in the wireless communication system (1000). Examples of the network node (104) may include, but are not limited to, access points, APs (for example, radio access points), base stations, BSs (for example, radio base stations, nodeBs, evolved NodeBs, eNBs, new radio, NR, nodes (gNBs), or the like). The BSs may be categorized based on an amount of coverage the BSs provide (or, stated different, their transmit power level) and may then also be referred to as femto BSs, pico BSs, micro BSs, macro BSs. The BS may be a relay node or a relay donor node controlling a relay.

The system (2000) refers to a device capable, configured, arranged and/or operable to communicate wirelessly with the network node (104) and/or other wireless devices.

In some examples, the system (2000) may include one or more of: computing devices, wireless devices, ultra-low power wireless devices, Internet of Things, loT, devices, and so on.

Examples of the computing devices may include, but are not limited to, a smart phone, a mobile phone, a cell phone, a voice over Internet Protocol, IP, VoIP, phone, a wireless local loop phone, a desktop computer, a personal digital assistant, PDA, a wireless camera, a gaming console or device, a wearable terminal device, a wireless endpoint, a mobile station, a tablet, a laptop, a laptop-embedded equipment, LEE, a laptop-mounted equipment, LME, a smart device, a wireless customer-premise equipment, CPE, a vehicle- mounted wireless terminal device, and so on. It should be understood that the system (2000) may not be limited to the above-described wireless devices. The system (2000) may be extended to other wireless devices of different classes or categories providing different services while supporting, for example, Enhanced Mobile Broadband, eMBB, massive Machine-Type Communication, MTC, Ultra-Reliable Low Latency Communication, URLLC, Time Sensitive Networking, TSN, or the like.

In the wireless communication system (1000), the network node (104) and the system (2000) are connected through 3GPP 5G core network where specific network services and operations are provided through software components called network functions (NFs). The wireless communication system (1000) hosts large scale applications.

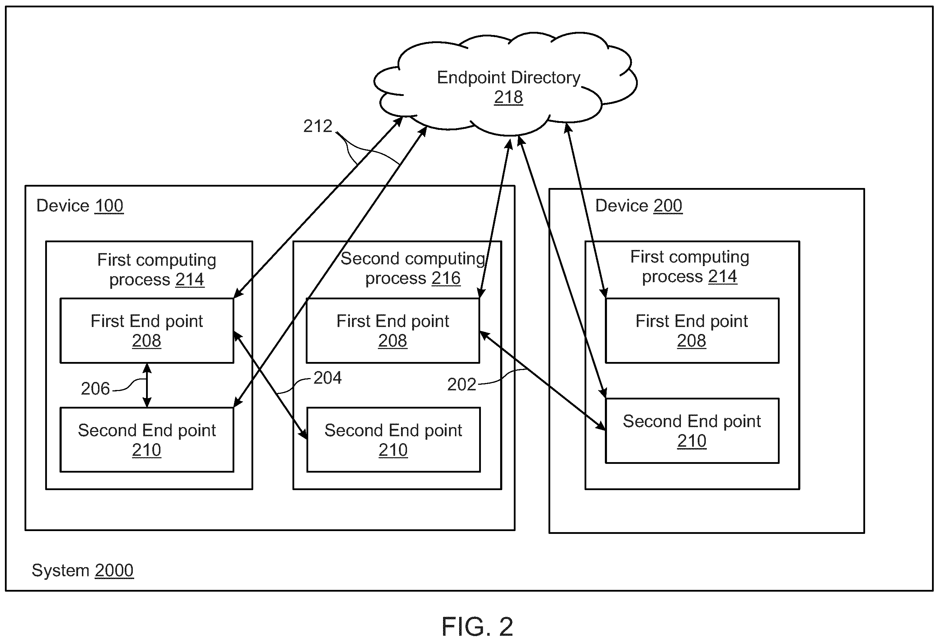

In an embodiment, FIG. 2 discloses a schematic block diagram illustrating an example system (2000) for providing selection of a communication channel (202, 204, 206) between at least two end points (208, 210) from a plurality of endpoints (208, 210). The plurality of end points (208, 210) facilitate a communication between a plurality of devices (100, 200) in a communication network (not shown in the FIG. 2). The selection of the communication channel (202, 204, 206) is performed through a service bus (212) from a plurality of service buses (212). The at least one service bus (212) may comprise a processing circuitry (not shown in FIG. 2). The processing circuitry may be adapted to execute the steps as executed by the at least one service bus (212). For example, the processing circuitry may be adapted to receiving, a request for sharing data between the at least one first endpoint (208) and at least one second endpoint (210), determining, at least one of an occurrence or a non-occurrence of a channel selection condition from one or more channel selection conditions, associated with the first endpoint (208) and the second endpoint (208), selecting a communication channel from one or more communication channel (202, 204, 206) based on one or more channel selection condition.

The one or more communication devices, also may referred as device (100, 200) are arranged to have at least one of a first end point (208) and a second end point (210). In an example, the device (100, 200) comprises a computer with a dedicated Central Processing Unit, CPU, memory, storage and a network interface and may be uniquely identifiable by a Media Access Control, MAC Address of its network interface. The device (100, 200) may have any number of computing processes (214, 216) running within the device (100, 200) and there may be any number of devices (100, 200) communicating with each other.

Each endpoint (208, 210) from the plurality of endpoints (208, 210) runs at least in one computing process (214, 216) and each computing process (214, 216) runs within the communication device (100) or the communication device (200). In an example, the computation process is a unit of computation using a dedicated memory space within the communication device (100, 200) and is uniquely identifiable by its process ID, PID, that is assigned by an Operating System, OS.

The first end point (208) and the second end point (210) are arranged in at least one device (100, 200), to share data with the one or more devices (100, 200) from the plurality of devices (100, 200).

The system (2000) further comprises at least one service bus (212) from the plurality of service buses (212). The service bus (212) is used to establish the communication between the endpoints (208, 210).

In an embodiment, the service bus (212) is arranged to receive a request for sharing data between the first endpoint (208) and the second endpoint (210). On receipt of the request, the service bus (212) determines at least one of an occurrence or a non-occurrence of one or more channel selection conditions, associated with the first endpoint (208) and the second endpoint (210). Based on the determination of the one or more channel selection conditions, the service bus (212) selects the communication channel from one or more communication channel (202, 204, 206). In other words, the data is shared between the first endpoint (208) and the second endpoint (210) via at least one of: the first communicating channel (202), the second communication channel (204) or the third communication channel (206) according to the determination of at least one of: the occurrence or non-occurrence of the first channel selection condition or the occurrence or non-occurrence of the second channel selection condition in case of the occurrence of the first channel selection condition.

The system (2000) further comprises an end point directory (218). The end point directory (218) knows how to reach each of the endpoint (208, 210). As shown in FIG. 2, the first end point (208) and the second point (210) are registered with the end point directory (218). The end point directory (218) stores one or more first condition check parameters and/or one or more second condition check parameters.

In some embodiments, the one or more first condition check parameters are used by the at least one service bus (202, 204, 206) to determine at least one of the non-occurrence or occurrence of the first channel selection condition. The one or more first condition check parameters comprises a Media Access Control, mac address or Internet Protocol, IP Address or the Domain Name System, DNS name of one or more communication devices (100, 200) from a plurality of communication devices.

Similarly, the one or more second condition check parameters are used to determine the non-occurrence or occurrence of the second channel selection condition. The one or more second condition check parameters comprise a Process Identification Number, PID of one or more computing processes (214, 216) from a plurality of computing processes (214, 216) assigned by at least one operating system. The at least one of the first end point (208) and the second end point (210) are arranged to run on at least one computing process (214, 216) from the plurality of computing processes (214, 216).

Therefore, embodiments herein provide the system (2000) in which the plurality of end points (208, 210) facilitates the communication between the plurality of devices (100, 200) in the communication network by analysing one or more channel selection conditions through the service bus (212) and thus, avoiding a need of any prior configuration to be done during a development time of any software or hardware product or any configuration required on customer side/during Project Engineering.

In an embodiment, as shown in FIG. 2, on receipt of the request for sharing data between the first endpoint (208) and the second endpoint (210), the service bus (212) first compare at least one first condition check parameter from the one or more first condition check parameters, such as mac address for the two communication devices (100, 200). Based on the comparing, the service bus (212) obtains a non-identical at least one first condition check parameter for each communication device (100, 200). Based on obtaining of the non-identical at least one first condition check parameter for each communication device (100, 200), the service bus (212) identifies an arrangement of the first endpoint (208) in a first communication device and an arrangement of the second endpoint (210) in a second communication device (100) from the two communication devices (100, 200). In an example, after identifying arrangement of the first endpoint (208) and the second endpoint (210) in two different communication device (100 and 200), the service bus (212) determines the non-occurrence of the first channel condition. Based on the determination of the non-occurrence of the first channel condition, the service bus (212) selects the first communication channel (202) from the one or more communication channels. In some examples, the first communication channel (202) comprises a physical transport layer, and the physical transport layer comprises an Ethernet communication channel.

In another embodiment, on receipt of the request for sharing data between the first endpoint (208) and the second endpoint (210), if the service bus (212) determines occurrence of the first channel condition, the service bus (212) may determine an occurrence or non-occurrence of the second channel condition. If the service bus (212) determines the occurrence of the first channel condition and non-occurrence of the second channel condition, the service bus (212) selects the second communication channel (204) from the one or more communication channels (202, 204, 206) for sharing the data.

In an example, if two endpoints (208) and (210) are on a same device (100 or 200) and if the two endpoints (208 and 210) are running in different computing process (214 or 216), the service bus (212) selects the second communication channel (204) for sharing the data. In an example, the second communication channel (204) comprises an internal communication channel of the at least one device (100, 200) and the internal communication channel comprises a shared memory of the least one device (100, 200).

In an example, in the system (2000), the data can be shared between two endpoints (208, 210) which are running within the same computing process (214, 216), through the internal communication channel such as zero copy. The internal communication channel may allow transmission of the data between the endpoints (208, 210) without copying the data in memory and hence may save time and resources. Thus, the system (2000) provides a fastest communication between two endpoints (208, 210) for sharing the data.

In yet another embodiment, on receipt of the request for sharing data between the first endpoint (208) and the second endpoint (210), if the service bus (212) determines the occurrence of the first channel condition and occurrence of the second channel condition, the service bus (212) selects the third communication channel (206) from the one or more communication channels (202, 204, 206) for sharing the data. In other words, if two endpoints, i.e., the first endpoint (208) and the second endpoint (210) are on a same device (100, 200) and if the two endpoints (208 and 210) are running on the same computing process (214 or 216), then the service bus (212) selects the third communication channel (206) for sharing the data. In an example, the third communication channel (206) comprises an internal communication channel of the first computing process (214), and the internal communication channel may include and not limited to a zero copy communication channel.

Advantageously, with the system (2000), a software developer may write code irrespective of whether the target service or the endpoints (208, 210) is local or remote. Further, the system (2000) provides flexibility while designing software or hardware products as there is no dependency on location where the endpoints (208, 210) or service is running.

In some embodiments, the determination of the occurrence of the first channel condition is described now. As shown in FIG. 2, on receipt of the request for sharing the data between the first endpoint (202) and the second endpoint (204), the at least one service bus (212) compares the at least one first condition check parameter from the one or more first condition check parameters, for at least two communication devices (100, 200). The service bus checks (212) if an identical at least one first condition check parameter, such as; MAC address for each communication device (100 or 200) from the at least two communication devices (100, 200) is obtained. Based on the obtaining of the identical at least one first condition check parameter, the at least one service bus (212) identifies the arrangement of each of the first endpoint (208) and the second endpoint (210) in any one the first communication device (100) or the second communication device (200) and the communication channel is selected accordingly.

In some embodiment, the non-occurrence of the second channel selection condition is now described. As shown in FIG. 2, on receipt of the request for sharing data between the first endpoint (202) and the second endpoint (204), the service bus (212) compares at least one second condition check parameter, such as the PID for at least two computing processes (214, 216) from the plurality of computing processes (214, 216). The at least two computing processes (214, 216) are arranged to run at least one of the first end point (208) and the second end point (210). Based on the comparison, the service bus (212) obtains a non-identical at least one second condition check parameter for each computing process (214, 216) from the two computing processes (214, 216). Based on the obtaining of non-identical at least one second condition check parameter, the service bus (212) identifies a first computing process (214) from the two computing processes arranged to run the at least one first end point (208) and a second computing process (216) from the at two computing processes (214, 216) arranged to run the at least one second end point (210).

In some embodiment, the occurrence of the second channel selection condition is now described. As shown in FIG. 2, on receipt of the request for sharing data between the first endpoint (202) and the second endpoint (204), the service bus (212) compares the at least one second condition check parameter from the one or more first condition check parameters, for the two computing processes (214, 216) arranged to run at least one of the first end point (208) and the second end point (210). Based on the comparison, the service bus (212) obtains an identical at least one second condition check parameter for each computing process (214, 216) from the two computing processes (214, 216). The service bus (212) then identifies any of the first computing process (214) or the second computing process (216) from the at least two computing processes (214, 216) arranged to run both the first endpoint (208) and the second end point (210) based on the obtaining of the identical at least one second condition check parameter.

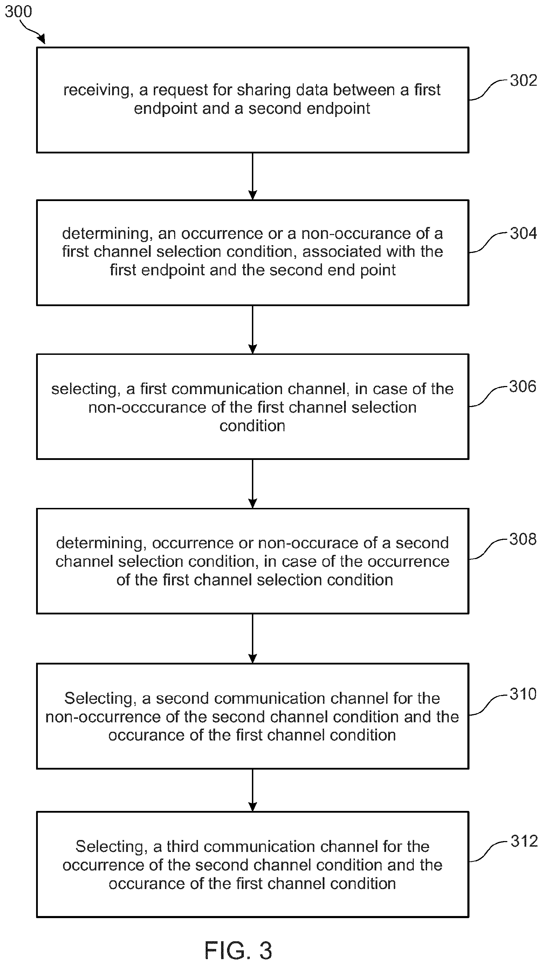

Fig. 3 is an exemplary flowchart illustrating steps of a method 300 implemented in the system 2000 for providing selection of the communication channel (202, 204, 206) between the at least two end points (208, 210) from the plurality of endpoints (208, 210) through the at least one service bus (212). The plurality of end points (208, 210) facilitates the communication between the plurality of devices (100, 200) in the communication network.

The order in which the method 300 is described is not intended to be construed as a limitation, and any number of the described method blocks may be combined in any order to implement the method 300 or alternate methods. Additionally, individual blocks may be deleted from the method 300 without departing from the spirit and scope of the embodiments described herein.

At step 302, the method 300 comprises receiving the request for sharing data between the first endpoint (208) and the second endpoint (210) from the plurality of endpoints. The request is received by the processing circuitry.

At step 304, the method 300 comprises determining the at least one of the occurrence or the non-occurrence of the first channel selection condition from the one or more channel selection conditions, associated with the first endpoint (208) and the second endpoint (210). The determination is performed through the processing circuitry.

At step 306, the method 300 comprises selecting the first communication channel (202) from the one or more communication channels (202, 204, 206) in case of the non-occurrence of the first channel selection condition. The selection is performed through the processing circuitry.

At step 308, the method 300 comprises determining the at least one of the occurrence or the non-occurrence of the second channel selection condition from the one or more channel selection conditions, in case of the occurrence of the first channel selection condition. The determination is performed through the processing circuitry.

At step 310, the method 300 comprises selecting the second communication channel from the one or more communication channels for at least one of the non-occurrence of the second channel condition and the occurrence of the first channel condition. The selection is performed through the processing circuitry.

At step 312, the method 300 comprises selecting, the third communication channel from the one or more communication channels for at least one of the occurrence of the second channel condition and the occurrence of the first channel condition. The selection is performed through the processing circuitry.

Optionally, additional details of the method 300 are similar to the details of the system 2000 and hence are not repeated for the sake of brevity.

In some embodiments, both the first end point and the second point are registered with an end point directory. The end point directory stores: one or more first condition check parameters determining at least one of the non-occurrence or occurrence of the first channel selection condition; and one or more second condition check parameters for determining the non-occurrence or occurrence of the second channel selection condition.

In some embodiments, the one or more first condition check parameters comprises a mac address, Internet Protocol, IP Address or the Domain Name System, DNS name of one or more communication devices from a plurality of communication devices. The one or more communication devices are arranged to have at least one of the first end point and the second end point, and the one or more second condition check parameters comprise a Process Identification Number, PID of one or more computing processes from a plurality of computing processes assigned by at least one operating system. The at least one of the first end point and the second end point are arranged to run on at least one computing process from the plurality of computing processes.

In some embodiments, the determining the non-occurrence of the first channel condition comprises comparing at least one first condition check parameter from the one or more first condition check parameters, for at least two communication devices from the plurality of communication devices arranged to have at least one of the first end point and the second end point; obtaining a non-identical at least one first condition check parameter for each communication device from the at least two communication devices based on the comparing; identifying an arrangement of the first endpoint in a first communication device from the at least two communication devices based on the obtaining of the non-identical at least one first condition check parameter; and identifying an arrangement of the second endpoint in a second communication device from the at least two communication devices based on the obtaining of the non-identical at least one first condition check parameter.

In some embodiments, the first communication channel comprises a physical transport layer and the physical transport layer comprises an Ethernet communication channel.

In some embodiments, the determining the occurrence of the first channel condition comprises comparing at least one first condition check parameter from the one or more first condition check parameters for at least two communication devices from the plurality of communication devices arranged to have at least one of the first end point and the second end point; obtaining an identical at least one first condition check parameter for each communication device from the at least two communication devices; identifying an arrangement of each of the first endpoint and the second endpoint in any one a first communication device or a second communication device from the at least two communication devices based on the obtaining of the identical at least one first condition check parameter.

In some embodiments, the determining the non-occurrence of the second channel selection condition comprises comparing at least one first condition check parameter from the one or more first condition check parameters, for at least two communication devices from the plurality of communication devices arranged to have at least one of the first end point and the second end point; obtaining an identical at least one first condition check parameter for each communication device from the at least two communication devices; identifying an arrangement of each of the first endpoint and the second endpoint in any one a first communication device or a second communication device from the at least two communication devices based on the obtaining of the identical at least one first condition check parameter.

In some embodiments, the second communication channel comprises an internal communication channel of at least one device from the one or more devices, and the internal communication channel comprises a shared memory of the least one device.

In some embodiments, the determining the occurrence of the second channel selection condition comprises comparing at least one second condition check parameter from the one or more first condition check parameters for at least two computing processes from the plurality of computing processes arranged to run at least one of the first end point and the second end point; obtaining an identical at least one second condition check parameter for each computing process from the at least two computing processes; identifying any of a first computing process or a second computing process from the at least two computing processes arranged to run both the first endpoint and the second end point based on the obtaining of the identical at least one second condition check parameter.

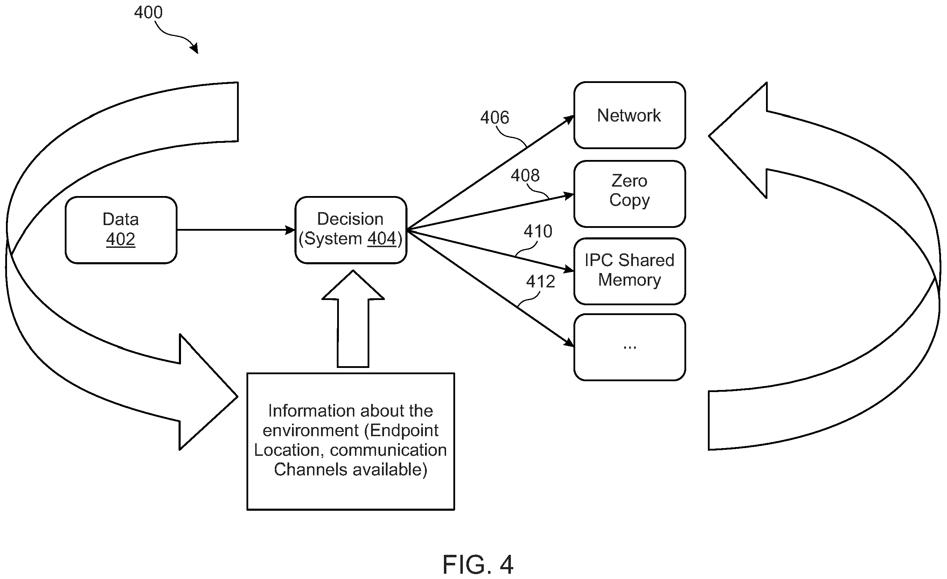

In some embodiments, the third communication channel comprises an internal communication channel of the first process, and the internal communication channel comprises a zero copy communication channel. Referring to FIG. 4, an example flow diagram (400) providing selection of the communication channel between the at least two end points (208, 210) according to some embodiments is shown. For each data (402), the system (404) takes a decision through the service bus (212) to find a most efficient communication channel (406, 408, 410). The system (404) is flexible in terms of the communication channels (406, 408, 410) that are supported. As shown in FIG. 4, the system (404) may receive information about a location of the endpoints (208, 210) or arrangements of the endpoints (208, 210), the one or more first condition check parameters, the one or more second condition check parameters, availability of the communication channels (202, 204, 206), etc. through the service bus (212) by communicating with the end point directory 218. Based on the received information, the data may be shared through at least one preferred communication channel identified from the plurality of communication channels (406, 408, 410), for example, through the physical transport layer or the zero copy or the IPC shared memory.

In an example, consumers may subscribe to the one or more data points (208, 210), they want to receive updates for, and a provider of the data may then use an appropriate communication channel identified from the plurality of communication channels (406, 408, 410) to send the requested updates to the consumers.

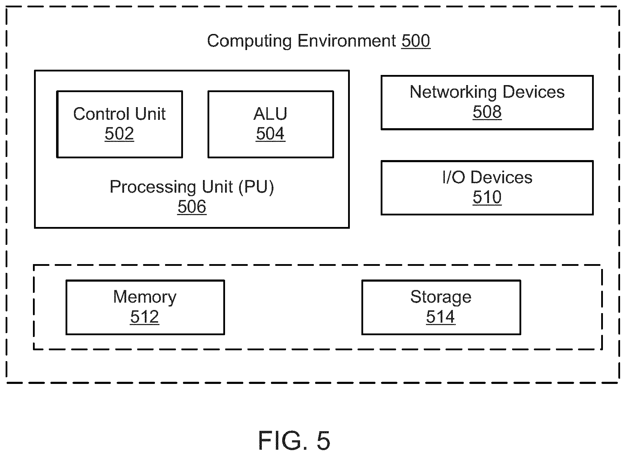

FIG. 5 illustrates an example-computing environment (500) implementing the system (2000) and the method (300) as shown in FIGS. 2, and 3 for providing selection of a communication channel (212) between at least two end points (208, 210). As depicted in FIG. 5, the computing environment (500) comprises at least one data processing module (506) that is equipped with a control module (502) and an Arithmetic Logic Unit (ALU) (504), a plurality of networking devices (508) and a plurality Input output, I/O devices (510), a memory (512), a storage (514). The data processing module (506) may be responsible for implementing the system and the method described in FIGS. 2 and 3 respectively. For example, the data processing module (506) in some embodiments be equivalent to the controlling circuitry of the platform described above in conjunction with FIGS. 2 and 3. The data processing module (506) is capable of executing software instructions stored in memory (512). The data processing module (506) receives commands from the control module (502) in order to perform its processing. Further, any logical and arithmetic operations involved in the execution of the instructions are computed with the help of the ALU (504).

The computer program is loadable into the data processing module (506), which may, for example, be comprised in an electronic apparatus (such as the platform). When loaded into the data processing module (506), the computer program may be stored in the memory (512) associated with or comprised in the data processing module (506). According to some embodiments, the computer program may, when loaded into and run by the data processing module 606, cause execution of method steps according to, for example, any of the methods illustrated in FIGS. 2 and 3, or otherwise described herein.

The overall computing environment (500) may be composed of multiple homogeneous and/or heterogeneous cores, multiple CPUs of different kinds, special media and other accelerators. Further, the plurality of data processing modules 606 may be located on a single chip or over multiple chips.

The algorithm comprising of instructions and codes required for the implementation are stored in either the memory (512) or the storage (514) or both. At the time of execution, the instructions may be fetched from the corresponding memory (512) and/or storage (514), and executed by the data processing module (506).

In case of any hardware implementations various networking devices (508) or external I/O devices (510) may be connected to the computing environment to support the implementation through the networking devices (508) and the I/O devices (510).

The embodiments disclosed herein can be implemented through at least one software program running on at least one hardware device and performing network management functions to control the elements. The elements shown in FIG. 5 include blocks which can be at least one of a hardware device, or a combination of hardware device and software module.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the disclosure.

## Claims

1. A system (2000) for providing selection of at least one communication channel (202, 204, 206) between at least two end points (208, 210) from a plurality of endpoints, through at least one service bus (212) from a plurality of service buses (212), wherein the plurality of end points (208, 210) facilitates a communication between a plurality of devices (100, 200) in a communication network, the system (2000) comprising:
at least one first end point (208) from the plurality of end points arranged to share data with one or more devices (100, 200) from the plurality of devices, wherein the at least one first end point (208) is arranged in at least one device (100, 200) from the plurality of devices;
at least one service bus (212) from the plurality of service buses (212), the at least one service bus (212) comprising a processing circuitry configured for:
receiving, a request for sharing data between the at least one first endpoint (208) and at least one second endpoint (210) from a plurality of endpoints arranged to share data with the one or more devices (100, 200) from the plurality of devices, wherein the at least one second end point (210) is arranged in at least one device from the plurality of devices (100, 200);
determining, at least one of an occurrence or a non-occurrence of a first channel selection condition from one or more channel selection conditions, associated with the first endpoint (208) and the second endpoint (208);
selecting, a first communication channel (202) from the one or more communication channels (202, 204, 206) in case of the non-occurrence of the first channel selection condition;
determining, at least one of an occurrence or a non-occurrence of a second channel selection condition from the one or more channel selection conditions, in case of the occurrence of the first channel selection condition;
selecting, a second communication channel (204) from the one or more communication channels (202, 204, 206) for at least one of the non-occurrence of the second channel condition and the occurrence of the first channel condition; and
selecting, through the at least one service bus (212), a third communication channel (206) from the one or more communication channels (202, 204, 206) for at least one of the occurrence of the second channel condition and the occurrence of the first channel condition;
wherein the at least one service bus (212) is further arranged for sharing data between the first endpoint (208) and the second endpoint (210) via at least one of the first communicating channel (202), the second communication channel (204) or the third communication channel (206) according to the determination of at least one of: the occurrence or non-occurrence of the first channel selection condition or the occurrence or non-occurrence of the second channel selection condition in case of the occurrence of the first channel selection condition.

2. The system (2000) according to claim 1, wherein both, the first end point (208) and the second point (210) are registered with an end point directory (218), wherein the end point directory (218) stores: one or more first condition check parameters determining at least one of the non-occurrence or occurrence of the first channel selection condition; and one or more second condition check parameters for determining the non-occurrence or occurrence of the second channel selection condition, and wherein the one or more first condition check parameters comprises a Media Access Control, MAC address, Internet Protocol, IP Address or the Domain Name System, DNS name of one or more communication devices (100, 200) from a plurality of communication devices, wherein the one or more communication devices are arranged to have at least one of the first end point and the second end point, and wherein the one or more second condition check parameters comprises a Process Identification Number, PID of one or more computing processes (214, 216) from a plurality of computing processes (214, 216) assigned by at least one operating system, wherein the at least one of the first end point (208) and the second end point (210) are arranged to run on at least one computing process from the plurality of computing processes.

3. The system (2000) according to any of the preceding claims, wherein the determining the non-occurrence of the first channel condition comprises:
comparing, at least one first condition check parameter from the one or more first condition check parameters, for at least two communication devices (100, 200) from the plurality of communication devices (100, 200) arranged to have at least one of the first end point (208) and the second end point (210);
obtaining a non-identical at least one first condition check parameter for each communication device (100, 200) from the at least two communication devices (100, 200) based on the comparing;
identifying, an arrangement of the first endpoint (208) in a first communication device (100) from the at least two communication devices (100, 200) based on the obtaining of the non-identical at least one first condition check parameter; and
identifying an arrangement of the second endpoint (210) in a second communication device (200) from the at least two communication devices (100, 200) based on the obtaining of the non-identical at least one first condition check parameter.

4. The system (2000) according to any of the claims 1-3, wherein the first communication channel (202) comprises a physical transport layer, wherein the physical transport layer comprises an Ethernet communication channel.

5. The system (2000) according to claims 1-2, wherein the determining the occurrence of the first channel condition comprises:
comparing, at least one first condition check parameter from the one or more first condition check parameters, for at least two communication devices from the plurality of communication devices arranged to have at least one of the first end point and the second end point;
obtaining, an identical at least one first condition check parameter for each communication device (100, 200) from the at least two communication devices (100, 200);
identifying, an arrangement of each of the first endpoint (202) and the second endpoint (210) in any one a first communication device (202) or a second communication device (200) from the at least two communication devices (100, 200) based on the obtaining of the identical at least one first condition check parameter.

6. The system (2000) according to claims 1-2 and 5, wherein the determining the non-occurrence of the second channel selection condition comprises:
comparing, at least one second condition check parameter from the one or more second condition check parameters, for at least two computing processes (214, 216) from the plurality of computing processes (214, 216) arranged to run at least one of the first end point (208) and the second end point (210);
obtaining a non-identical at least one second condition check parameter for each computing process from the at least two computing processes (214, 216);
identifying, a first computing process (214) from the at least two computing processes (214, 216) arranged to run the at least one first end point (208), based on the obtaining of non-identical at least one second condition check parameter; and
identifying, a second computing process (216) from the at least two computing processes (214, 216) arranged to run the at least one second end point (210), based on the obtaining of non-identical at least one second condition check parameter.

7. The system (2000) according to any of the claims 1-2 or 5-6, wherein the second communication channel (204) comprises an internal communication channel of at least one device from the one or more devices (100, 200), wherein the internal communication channel comprises a shared memory of the least one device.

8. The system (2000) according to claims 1-2, wherein the determining the occurrence of the second channel selection condition comprises:
comparing, at least one second condition check parameter from the one or more first condition check parameters, for at least two computing processes (214, 216) from the plurality of computing processes (214, 216) arranged to run at least one of the first end point (208) and the second end point (210);
obtaining an identical at least one second condition check parameter for each computing process (214) from the at least two computing processes (214, 216);
identifying, any of a first computing process (214) or a second computing process (216) from the at least two computing processes (214, 216) arranged to run both the first endpoint (208) and the second end point (210) based on the obtaining of the identical at least one second condition check parameter.

9. The system (2000) according to any of the claims 1-2 or 8, wherein the third communication channel (206) comprises an internal communication channel of the first process, wherein the internal communication channel comprises a zero copy communication channel.

10. A method (300) providing selection of at least one communication channel (202, 204, 206) between at least two end points (208, 210) from a plurality of endpoints, through at least one service bus (212) from a plurality of service buses (212), wherein the plurality of end points (208, 210) facilitates a communication between a plurality of devices (100, 200) in a communication network, wherein the at least one service bus (212) comprising a processing circuitry the method (300) comprising:
receiving, by at the processing circuitry, a request for sharing data between at least one first endpoint (208) and at least one second endpoint (210) from a plurality of endpoints (208, 210), wherein the at least one first end point (208) and the at least one second end point (210) is arranged in at least one device (100, 200) from the plurality of devices (100, 200);
determining, through the processing circuitry, at least one of an occurrence or a non-occurrence of a first channel selection condition from one or more channel selection conditions, associated with the first endpoint (208) and the second endpoint (210);
selecting, through the processing circuitry, a first communication channel (202) from the one or more communication channels in case of the non-occurrence of the first channel selection condition;
determining, through the processing circuitry, at least one of an occurrence or a non-occurrence of a second channel selection condition from the one or more channel selection conditions, in case of the occurrence of the first channel selection condition;
selecting, through the processing circuitry, a second communication channel (204) from the one or more communication channels (202, 204, 206) for at least one of the non-occurrence of the second channel condition and the occurrence of the first channel condition; and
selecting, through the processing circuitry, a third communication channel (206) from the one or more communication channels (202, 204, 206) for at least one of the occurrence of the second channel condition and the occurrence of the first channel condition;
wherein the data is shared between the first endpoint (208) and the second endpoint (210) via at least one of the first communicating channel (202), the second communication channel (204) or the third communication channel (206) according to the determination of at least one of: the occurrence or non-occurrence of the first channel selection condition or the occurrence or non-occurrence of the second channel selection condition in case of the occurrence of the first channel selection condition.

11. The method (300) according to claim 10, wherein both, the first end point (208) and the second point (210) are registered with an end point directory (218), wherein the end point directory (218) stores: one or more first condition check parameters determining at least one of the non-occurrence or occurrence of the first channel selection condition; and one or more second condition check parameters for determining the non-occurrence or occurrence of the second channel selection condition.

12. The method (300) according to any of the claims 10-11, wherein the determining the non-occurrence of the first channel condition comprises:
comparing, at least one first condition check parameter from the one or more first condition check parameters, for at least two communication devices (100, 200) from the plurality of communication devices arranged to have at least one of the first end point (208) and the second end point (210);
obtaining a non-identical at least one first condition check parameter for each communication device from the at least two communication devices (100, 200) based on the comparing;
identifying, an arrangement of the first endpoint (208) in a first communication device (100) from the at least two communication devices (100, 200) based on the obtaining of the non-identical at least one first condition check parameter; and
identifying an arrangement of the second endpoint in a second communication device from the at least two communication devices based on the obtaining of the non-identical at least one first condition check parameter.

13. The method (300) according to claims 10-11, wherein the determining the occurrence of the first channel condition comprises:
comparing, at least one first condition check parameter from the one or more first condition check parameters, for at least two communication devices from the plurality of communication devices arranged to have at least one of the first end point and the second end point;
obtaining, an identical at least one first condition check parameter for each communication device (100, 200) from the at least two communication devices (100, 200);
identifying, an arrangement of each of the first endpoint (202) and the second endpoint (210) in any one a first communication device (202) or a second communication device (200) from the at least two communication devices (100, 200) based on the obtaining of the identical at least one first condition check parameter.

14. The method (300) according to claims 10-11 and 13, wherein the determining the non-occurrence of the second channel selection condition comprises:
comparing, at least one second condition check parameter from the one or more second condition check parameters, for at least two computing processes (214, 216) from the plurality of computing processes (214, 216) arranged to run at least one of the first end point (208) and the second end point (210);
obtaining a non-identical at least one second condition check parameter for each computing process from the at least two computing processes (214, 216);
identifying, a first computing process (214) from the at least two computing processes (214, 216) arranged to run the at least one first end point (208), based on the obtaining of non-identical at least one second condition check parameter; and
identifying, a second computing process (216) from the at least two computing processes (214, 216) arranged to run the at least one second end point (210), based on the obtaining of non-identical at least one second condition check parameter.

15. The method (300) according to claims 10-11, wherein the determining the occurrence of the second channel selection condition comprises:
comparing, at least one second condition check parameter from the one or more first condition check parameters, for at least two computing processes (214, 216) from the plurality of computing processes (214, 216) arranged to run at least one of the first end point (208) and the second end point (210);
obtaining an identical at least one second condition check parameter for each computing process (214) from the at least two computing processes (214, 216);
identifying, any of a first computing process (214) or a second computing process (216) from the at least two computing processes (214, 216) arranged to run both the first endpoint (208) and the second end point (210) based on the obtaining of the identical at least one second condition check parameter.
